# EUROPEAN PATENT APPLICATION

(11) **EP 4 559 737 A1**
(43) Date of publication of application: **28.05.2025**
(21) Application number: 23211213.6
(22) Date of filing: 21.11.2023
(51) Int. Cl.: B60L 58/13, B60L 58/15, B60W 20/12, B60W 20/13, B60W 20/14, B60W 40/076

(54) **SYSTEM AND METHOD OF CONTROLLING A MAXIMUM CHARGE LEVEL**

(71) Applicant: VOLVO TRUCK CORPORATION, 405 08 Göteborg (SE)
(72) Inventor: HOLMSTRÖM, Anders, 423 37 Torslanda (SE); NORDHOLM, Linus, 436 40 Askim (SE); SMIDEBRANT, Tobias, 415 51 Göteborg (SE)
(74) Representative: Kransell & Wennborg KB

(57) **Abstract**

The present disclosure relates to a computer system comprising processing circuitry configured to control charging of a high-voltage energy storage system of a vehicle, the processing circuitry being configured to obtain data of at least one geographic zone comprising a road with a downhill slope, determine a regenerative charge power of an electric traction motor of the vehicle during operation of at least a portion of the downhill slope, determine a charge power ability of the high-voltage energy storage system when the vehicle arrives to the portion of the downhill slope, in response to the regenerative charge power exceeding the charge power ability at the portion of the downhill slope, set a reduced maximum charge level of the high-voltage energy storage system, and control charging of the high-voltage energy storage system at the current charging position to an energy level to, or below, the reduced maximum charge level.

## Description

### TECHNICAL FIELD

The disclosure relates generally to charge planning. In particular aspects, the disclosure relates to a system and a method of controlling a maximum charge level of an energy storage system in response to a downhill slope located at a geographic zone positioned within a predetermined radius from a vehicle with an energy storage system to be charged. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles with an electric drive train may need to be charged at one or several vehicle charging stations along a route. The route, and/or which vehicle charging station(s) to use, may be determined using a route/charging planning system.

The large weight of an electrified heavy truck vehicle may require certain special reconsiderations when charging an energy storage system of such vehicle compared to e.g. charging a battery of a car. In particular, an upcoming downhill slope may be of such magnitude that the regenerative braking capacity of the vehicle will be exceeded if the state of charge level is too high before entering the downhill slope. There is thus a desire control charging of the energy storage system to enable for an optimum braking capacity at downhill slope operation.

### SUMMARY

According to a first aspect of the disclosure, there is provided a computer system comprising processing circuitry configured to control charging of a high-voltage energy storage system of a vehicle, the processing circuitry being configured to obtain data of at least one geographic zone positioned within a predetermined radius from a current charging position of the vehicle, the at least one geographic zone comprising a road with a downhill slope, determine a regenerative charge power of an electric traction motor of the vehicle during operation of at least a portion of the downhill slope, determine a charge power ability of the high-voltage energy storage system when the vehicle arrives to the portion of the downhill slope, in response to the regenerative charge power exceeding the charge power ability at the portion of the downhill slope, set a reduced maximum charge level of the high-voltage energy storage system, and control charging of the high-voltage energy storage system at the current charging position to an energy level to, or below, the reduced maximum charge level.

The first aspect of the disclosure may seek to improve the braking capacity for a vehicle comprising an electric traction motor operable to propel the vehicle and to regenerate electric energy during braking. In particular, if arriving at the downhill slope of the geographic zone after charging, it can be assured that the high-voltage energy storage system will be able to absorb the electric power generated by the electric traction motor. The charge power ability should thus be understood to mean the ability of the high-voltage energy storage system to receive the electric power generated by the electric traction motor. In further detail, the ability for a high-voltage energy storage system to receive electric power is lower when the charge level of the high-voltage energy storage system is high compared to when the charge level of the high-voltage energy storage system is lower. As a non-limiting example, the charge power ability may be reduced when the charge level exceeds e.g. 80% of its maximum capacity. For such non-limiting example, the processing circuitry may advantageously set a reduced maximum charge level of the high-voltage energy storage system such that the charge level is below 80% of its maximum capacity when potentially arriving at the portion of the downhill slope within the geographic zone. The charge power ability may also refer to the energy capacity of the high-voltage energy storage system to absorb electric energy from the electric traction motor, alternatively in conjunction with an energy dissipation system arranged to dissipate electric power. Such energy dissipation system may, for example, comprise an electric brake resistor. The charge power ability may for example refer to the state of charge of the high-voltage energy storage system. The charge power ability may thus also refer to an energy available for the high-voltage energy storage system. Other vehicle systems or vehicle components may also affect the charge power ability, such as e.g. shafts, the transmission, cooling systems, high-voltage limitations, etc. A technical benefit may thus include that the brake capability of the electric traction motor is optimized and electric energy may not need to be dissipated during braking since the high-voltage energy storage system will be able to absorb the generated electric energy.

Furthermore, the road with the downhill slope within the at least one geographic zone should be construed as a road that the vehicle may potentially drive at after charging is completed. However, the vehicle may be operated at another completely different road after charging. For example, the road with the downhill slope may be located south from the position of charging. The vehicle may however, after charging is complete, drive north and thus not expose the electric traction motor to the determined regenerative charge power. The geographic zone is thus preferably a non-navigational inputted zone. A technical benefit may include that the computational capacity is reduced compared to also determining which road and direction the vehicle will operate after charging. Also, and in some sense more important, the first aspect enables for a safer solution since a destination input from e.g. an operator is not necessary for the functionality of the first aspect. In particular, operators of vehicles may often already know the roads to subsequently drive after charging and do not use the navigation system to input such destination, whereby the processing circuitry is unaware of downhill slopes ahead. The reduced maximum charge level of the high-voltage energy storage system is hence set irrespective of the subsequent route the vehicle will be driving. Should the vehicle drive the road with the downhill slope, the chargeability of the high-voltage energy storage system can be improved, although this may come with a cost on operable range if the vehicle is not driven along the road with the downhill slope. Should the vehicle be operated at the road with the downhill slope, service brake temperature will be reduced as the need to intervene with the service brakes will be reduced. The first aspect may thus enable for a safe solution that considers any potential upcoming drive path.

Furthermore, it should be readily understood that the first aspect is applicable for battery electric vehicles (BEV) as well as hybrid vehicles comprising an electric traction motor in combination with a conventional internal combustion engine, and for fuel cell electric vehicles (FCEV). In the latter example, the charging is controlled by feeding electric power from a fuel cell to the high-voltage energy storage system. As such, the first aspect can be operational during operation of the vehicle, i.e. when the vehicle is driving. Also, the predetermined radius should be construed as being a dynamic value, i.e. distance of the predetermined radius can vary as will be described further below. The predetermined radius may also be a fixed value. As a non-limiting example, the predetermined radius can be a fixed value pre-programmed to the processing circuitry, or a value depending on the specific position of the vehicle. In addition to the examples presented above, the present disclosure is also applicable for vehicles that can charge a high-voltage battery while driving on a socalled e-highway that comprises conductive or inductive charge segments along the road. Also, the high-voltage energy storage system should be construed as an energy storage system capable of feeding electric power to an electric traction motor propelling the vehicle, as well as to be able to receive electric power during regenerative braking.

Also, the definition "control charging" should preferably be construed such that the processing circuitry interrupt charging of the high-voltage energy storage system when the charge level reaches the reduced maximum charge level. As such, an operator of the vehicle may obviously charge to a lower charge level than the reduced maximum charge level should he/she desire to do so.

Optionally in some examples, including in at least one preferred example, the charge power ability is based on a predicted electric energy level of the high-voltage energy storage system when the vehicle arrives at the at least one portion of the downhill slope. A technical benefit may include, and as indicated above, that the high-voltage energy storage system is able to absorb all the electric energy generated by the electric traction motor. The processing circuitry may thus advantageously determine a level of electric energy consumed and absorbed by the high-voltage energy storage system before arriving at the portion of the downhill slope, i.e. from the position of charging to the portion of the downhill slope.

Optionally in some examples, including in at least one preferred example, the processing circuitry is further configured to determine a charge level of the high-voltage energy storage system at the portion of the downhill slope resulting in an updated charge power ability exceeding the regenerative charge power, and set the reduced maximum charge level at the charging position in response to the charge level. A technical benefit may include that it can be assured that the high-voltage energy storage system will be able to absorb the energy generated by the electric traction motor. In addition, and as indicated above, given that the chargeability of the high-voltage energy storage system is higher at lower charge levels, more energy will be recuperated if the vehicle is operated at the road with the downhill slope, which in turn may reduce the temperature level of the service brakes.

Optionally in some examples, including in at least one preferred example, the processing circuitry is further configured to determine a level of electric energy consumable by the high-voltage energy storage system from the current charging position to the portion of the downhill slope, set the reduced maximum charge level at the charging position in response to the charge level and the level of consumable electric energy. A technical benefit may include that the high-voltage energy storage system may be charged to a higher level if the high-voltage energy storage system is determined to consume a relatively high level of electric energy before arriving at the portion of the downhill slope. An increased overall range of operation for the vehicle can hereby be provided. As indicated above, electric energy absorbed by the high-voltage energy storage system from the charging position to the portion of the downhill slope may also be determined and taken into account when determining the charge power ability of the high-voltage energy storage system at the portion of the downhill slope.

Optionally in some examples, including in at least one preferred example, the processing circuitry is further configured to determine a total brake power required to obtain a desired vehicle speed during operation of the portion of the downhill slope, determine a brake power capability of at least one service brake of the vehicle, and determine a regenerative charge power of the electric traction motor as a difference between the total brake power and the brake power capability of the at least one service brake. A technical benefit may include that a brake blending operation of the vehicle may be provided at the portion of the downhill slope. Hereby, the risk of overheating the service brakes is reduced while at the same time enabling for optimum charging of the high-voltage energy storage system. A reduction of the temperature level of the service brakes may in turn increase the operational lifetime of the service brakes. Also, by brake blending during the portion of the downhill slope, the reduced maximum charge level can be set to a higher level during charging, thereby increasing the operational range for the vehicle.

Optionally in some examples, including in at least one preferred example, the processing circuitry is further configured to: obtain a first and second geographic zone positioned within the predetermined radius from the current charging position, the first geographic zone comprising a first road with a first downhill slope and the second geographic zone comprising a second road with a second downhill slope, compare a first regenerative charge power of the electric traction motor for obtaining a first desired vehicle speed during operation at the first downhill slope with a second regenerative charge power of the electric traction motor for obtaining a second desired vehicle speed during operation at the second downhill slope, and set the reduced maximum charge level of the high-voltage energy storage system in response to the largest one of the first and second regenerative charge powers. A technical benefit may include that a worst case scenario can be used for setting the reduced maximum charge level of the high-voltage energy storage system. Thus, the road, of the first and second roads, generating the largest regenerative charge power will be used for setting the reduced maximum charge level. It can thus be even further assured that the high-voltage energy storage system will be able to absorb electric energy after the charging event.

Optionally in some examples, including in at least one preferred example, the at least one portion of the downhill slope is the portion of the downhill slope requiring the largest regenerative charge power to obtain the desired vehicle speed.

Optionally in some examples, including in at least one preferred example, the desired vehicle speed is a predefined vehicle speed at the downhill slope.

Optionally in some examples, including in at least one preferred example, the predefined vehicle speed is a legislative speed limit of the downhill slope.

Optionally in some examples, including in at least one preferred example, the data of the geographic zone is received from a memory of the computer system, the memory comprising a data of a plurality of geographic zones, each geographic zone being associated with a map coordinate position.

Optionally in some examples, including in at least one preferred example, the processing circuitry is further configured to receive map data coordinates of the current charging position, and obtain the data of the at least one geographic zone from the memory in response to the map data coordinates of the current charging position. A technical benefit may include that the computational effort can be reduced. In detail, the processing circuitry merely needs to know the current position and retrieve data from the memory. The memory preferably comprises a database with the plurality of geographic zones. The database may preferably be arranged in the form of a look-up table.

Optionally in some examples, including in at least one preferred example, the regenerative charge power is determined in response to a slope angle of the downhill slope. Thus, a steeper slope will generate a higher charge power compared to a less steep slope.

Optionally in some examples, including in at least one preferred example, the regenerative charge power is further determined in response to a length of the downhill slope. Further, a combination of a length a slope angle of the downhill slope may be used to determine the regenerative charge power at the downhill slope. The length of the downhill slope may also be associated with the capability of the service brakes. Thus, taking the length of the downhill slope into consideration, the operational lifetime of the service brakes may be prolonged.

Optionally in some examples, including in at least one preferred example, the processing circuitry is further configured to determine a distance from the charging position to the portion of the downhill slope, and control charging of the high-voltage energy storage system at the current charging position to the energy level to, or below, the reduced maximum state of charge level only when the distance to the portion of the downhill slope is below a predetermined distance value. A technical benefit is that the high-voltage energy storage system can be charged to its maximum capacity if it is determined that no road portion within the predetermined radius can cause the regenerative charge power to exceed the charge power ability. The overall operational distance for the vehicle may be increased.

According to a second aspect, there is provided a vehicle comprising the computer system of any of the examples described above in relation to the first aspect.

Optionally in some examples, including in at least one preferred example, the vehicle further comprises an electric traction motor electrically connected to the high-voltage energy storage system, wherein the high-voltage energy storage system is configured to feed electric energy to the electric traction motor during propulsion of the vehicle, and to receive electric energy from the electric traction motor during braking.

Effects and features of the second aspect are largely analogous to those described above in relation to the first aspect.

According to a third aspect, there is provided a computer-implemented method of controlling charging of a high-voltage energy storage system of a vehicle, the method comprising obtaining, by a processing circuitry of a computer system, data of at least one geographic zone positioned within a predetermined radius from a current charging position of the vehicle, the at least one geographic zone comprising a road with a downhill slope, determining, by the processing circuitry, a regenerative charge power of an electric traction motor of the vehicle during operation of at least a portion of the downhill slope, determining, by the processing circuitry, a charge power ability of the high-voltage energy storage system when the vehicle arrives to the portion of the downhill slope, in response to the regenerative charge power exceeding the charge power ability at the portion of the downhill slope, setting, by the processing circuitry, a reduced maximum charge level of the high-voltage energy storage system, and controlling, by the processing circuitry, charging of the high-voltage energy storage system at the current charging position to an energy level to, or below, the reduced maximum charge level.

Effects and features of the third aspect are largely analogous to those described above in relation to the first aspect.

According to a fourth aspect, there is provided a computer program product comprising program code for performing, when executed by the processing circuitry, the method of the third aspect.

According to a fifth aspect, there is provided a non-transitory computer-readable storage medium comprising instructions, which when executed by the processing circuitry, cause the processing circuitry to perform the method of the third aspect.

Effects and features of the fourth and fifth aspects are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary graph illustrating a relationship between charge level and charge power ability of a high-voltage energy storage system according to an example,
Fig. 3 is an exemplary illustration of a schematic presentation of geographic zones at a distance from a charging position according to an example,
Fig. 4 is an exemplary illustration of downhill slopes within a predetermined radius from a charging position according to an example,
Fig. 5 is an exemplary flow chart of a method of controlling charging of a high-voltage energy storage system, and
Fig. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The disclosure described in the following may seek to improve the braking capability for a vehicle at least partly propelled by an electric traction motor, which electric traction motor is operable to generate electric power during braking.

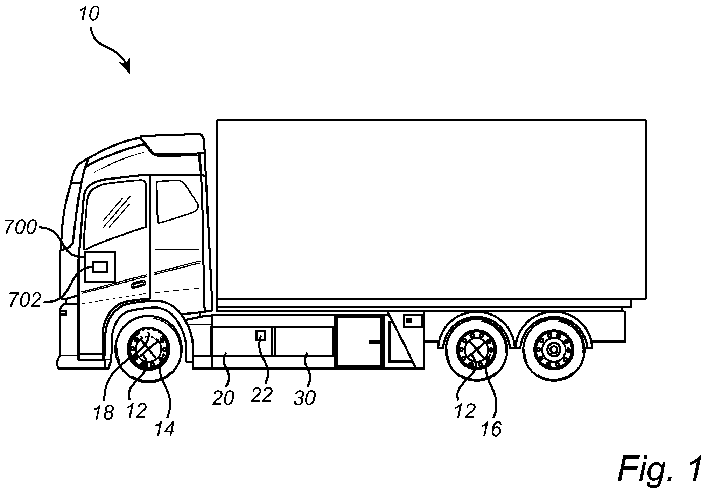

Turning to Fig. 1 which is an exemplary illustration of a vehicle 10 according to an example. The exemplified vehicle 10 is configured to be at least partly propelled by one or more electric traction motors 12. In Fig. 1, the electric traction motors 12 are exemplified as wheel hub motor connected to the pair of front wheels 14 as well as to the foremost pair of rear wheels 16. However, the vehicle 10 may alternatively comprises a single electric traction motor connected to the wheels via a conventional propulsion shaft (not shown). The at least one electric traction motor 12 is configured to apply a propulsive power to the wheels of the vehicle during propulsion, and to generate electric power during braking.

The vehicle further comprises a high-voltage energy storage system 20, also referred to as a high-voltage vehicle battery. The high-voltage energy storage system 20 is configured to feed electric power to the electric traction motor 12 during propulsion of the vehicle 10 and to receive electric power during braking. The high-voltage energy storage system 20 can be charged externally at a charge socket 22. In further detail, the high-voltage energy storage system 20 can be charge at a charging station by attaching a charge plug of a charging cable to the charge socket 22.

According to a non-limiting example, the vehicle 10 may also comprise a fuel cell 30 configured to generate electric energy, which electric energy can be fed to the high-voltage energy storage system 20 during operation of the vehicle 10, or when the vehicle 10 is standing still. Such fuel cell 30 preferably generates electric energy during a chemical reaction of hydrogen and oxygen. Thus, the vehicle 10 preferably comprises a gas tank (not shown) comprising hydrogen to be fed to the fuel cell. Hence, the high-voltage energy storage system 20 can be charged while the vehicle 10 is being driven.

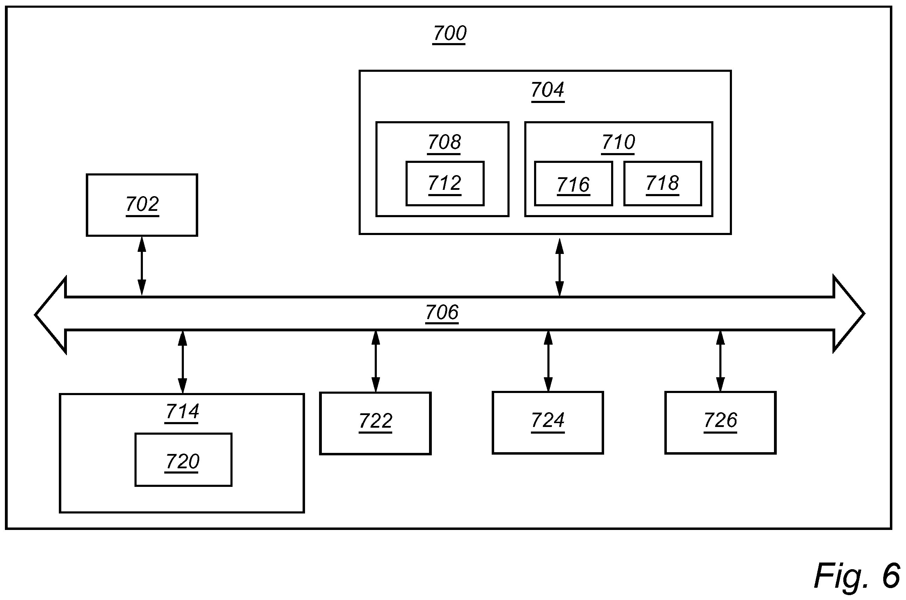

Furthermore, the vehicle 10 also comprises a computer system 700. The computer system 700 comprises processing circuitry 702 which, amongst other things, is configured to control a charge level of the high-voltage energy storage system 20 either when the vehicle 10 is stationary and charged at a charging station and/or when the high-voltage energy storage system 20 is charge by electric power generated by the fuel cell 30 when the vehicle 10 is driven. Exemplified details of the computer system 700 and the processing circuitry 702 will be given below in relation to the description of Fig. 6.

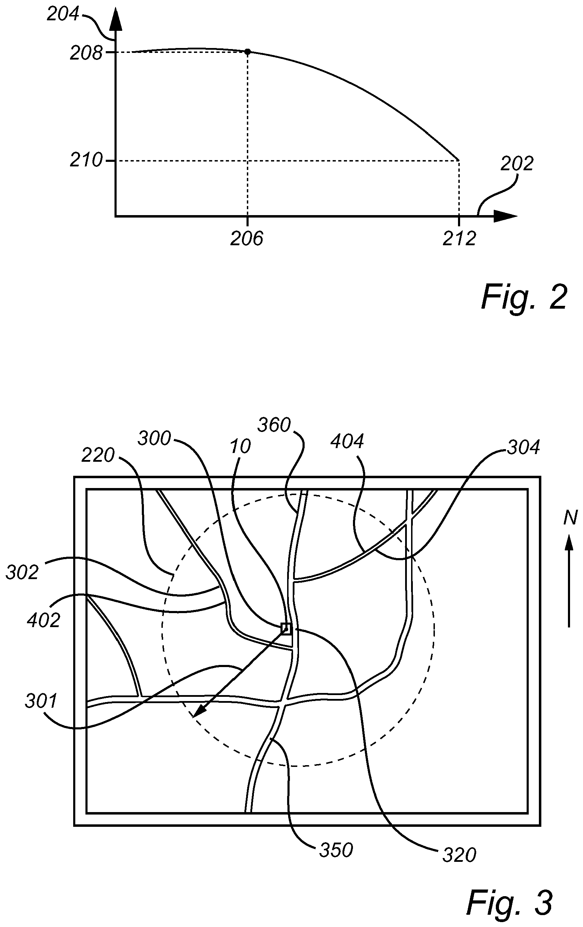

During charging of the high-voltage energy storage system 20 by electric power generated by the electric traction motor 12, the high-voltage energy storage system 20 may be susceptible to different levels of charge power in dependency of its current charge level. This is in the following referred to as the charge power ability of the high-voltage energy storage system 20. With particular reference to Fig. 2, which is an exemplary graph illustrating a relationship between charge level and charge power ability of the high-voltage energy storage 20system according to an example.

In Fig. 2, the abscissa indicates the charge level 202 of the energy storage system 20 and the ordinate indicates the charge power ability 204 of the energy storage system 20. As exemplified in Fig. 2, the charge power ability 204 is continuously reduced from a predetermined or pre-set charge level 206 of the high-voltage energy storage system 20. Thus, for a charge level 202 below the predetermined or pre-set charge level 206, the high-voltage energy storage system 20 can absorb a maximum level of charge power, which maximum level can vary from energy storage system to energy storage system. Thus, below the predetermined or pre-set charge level 206, the charge power ability 204 is at a maximum charge power ability 208. For a charge level 202 higher than the predetermined or pre-set charge level 206, the charge power ability 204 is reduced. Accordingly, by reducing the charge level 202, the charge power ability 204 is increased. The charge power ability 204 is exemplified as being continuously reduced until reaching a minimum level of charge power ability 210 at a predetermined maximum charge level 212. The predetermined maximum charge level 212 may be slightly before the high-voltage energy storage system 20 is fully charged. It should however be readily understood, although not depicted in Fig. 2, that the charge power ability 204 may be reduced to a preset limit when the charge level 202 exceeds the predetermined or pre-set charge level 206, i.e. a step wise reduction to a lower charge power ability level which is the same between the predetermined or pre-set charge level 206 and the predetermined maximum charge level 212.

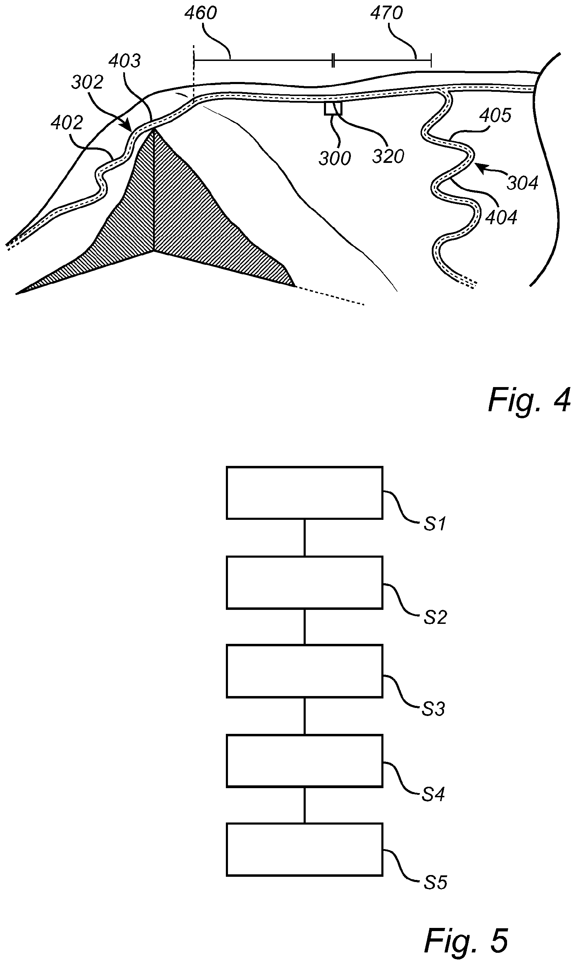

The following will, with reference to Figs. 3 - 5 now describe a method of controlling charging of the high-voltage energy storage system 20 according to an example. The method will be described in relation to charging the high-voltage energy storage system 20 externally at a charging station 300 positioned at a charging position 320 but should be construed as also applicable for a hybrid vehicle as well as when charging the high-voltage energy storage system 20 by electric power from the above described fuel cell 30 when the vehicle is driven. In the latter example, the charging position 320 is the current position of the vehicle 10 when the high-voltage energy storage system 20 is charged by electric power from the fuel cell 30. Fig. 3 is an exemplary illustration of a schematic presentation of geographic zones at a distance from the charging station 300 according to an example, Fig. 4 is an exemplary illustration of downhill slopes 402, 404 within a predetermined radius from the charging station 300 according to an example, and Fig. 5 is an exemplary flow chart of a method of controlling charging of the high-voltage energy storage system 20. In Fig. 3, the north direction N of the schematic presentation is indicated.

Before the high-voltage energy storage system 20 is charged with electric power at the charging station 300, the processing circuitry 702 obtains S 1 data of at least one geographic zone 302, 304 within a predetermined radius 301 from a current charging position of the vehicle 10. The processing circuitry 702 may thus obtain data of the at least one geographic zone 302, 304 within an area 220 defined by the predetermined radius 301. The at least one geographic zone 302, 304 comprises a road 403, 405 with a downhill slope 402, 404. In the exemplified illustration of Figs. 3 and 4, data of a first 302 and a second 304 geographic zone is obtained, where the downhill slope 402 of the first geographic zone 302 is initiated at a first distance 460 from the charging station 300 and the downhill slope 404 of the second geographic zone 304 is initiated at a second distance 470 from the charging station 300. The first 460 and second 470 distances are thus within the area 220 defined by the predetermined radius 301. It should however be readily understood that data may be obtained for a single geographic zone, or more than two geographic zones.

The processing circuitry 702 thereafter determines S2 a regenerative charge power of the electric traction motor 12 during operation of at least a portion of the downhill slope 402, 404. According to an example, the regenerative charge power may be the brake power required by the electric traction motor 12 to obtain a desired vehicle speed. As an alternative, the regenerative charge power may be a brake contribution by the electric traction motor 12 in a brake blending operation to obtain a desired vehicle speed. In the latter example, the processing circuitry 702 can be configured to determine a total brake power required to obtain the desired vehicle speed during operation of the portion of the downhill slope 402, 404. The processing circuitry 702 may further be configured to determine a brake power capability of at least one service brake (18 in Fig. 1) of the vehicle 10, and to determine a regenerative charge power of the electric traction motor 12 as a difference between the total brake power and the brake power capability of the at least one service brake. The desired vehicle speed is a predefined vehicle speed at the downhill slop, such as e.g. a legislative speed limit of the downhill slope.

Furthermore, the processing circuitry 702 may also be configured to determine S3 a charge power ability 204 of the high-voltage energy storage system 12 when the vehicle arrives to the portion of the downhill slope 402, 404. As described above in relation to the description of Fig. 2, the charge power ability 204 may be dependent on the charge level 402 of the high-voltage energy storage system 20 and the processing circuitry 702 determines or estimates the charge power ability 204 the high-voltage energy storage system 20 will have when potentially arriving at the portion of the downhill slope 402, 404. According to an example, the charge power ability 204 may thus be based on a predicted electric energy level, i.e. predicted charge level 202, of the high-voltage energy storage system 20 when the vehicle 10 arrives at the at least one portion of the downhill slope 402, 404. Preferably, the processing circuitry 702 may determine a level of energy consumed by the electric traction motor 12 and a level of energy generated by the electric traction motor 12 and fed to the high-voltage energy storage system 20 from the charging station 300 to the portion of the downhill slope 402, 404 to predict the charge level, and in turn to thereby predict the charge power ability 204, of the high-voltage energy storage system 20 at the portion of the downhill slope 402, 404. Hence, a net consumption of electric energy from the charging station 300 to the portion of the downhill slope 402, 404 is preferably determined.

If the processing circuitry 702 determines that the charge power ability 204 for a fully charged high-voltage energy storage system 20 at the charging position 302 will be lower than the determined regenerative charge power of the electric traction motor 12 when the vehicle 10 arrives at the portion of the downhill slope 402, 404, the charging level of the high-voltage energy storage system 20 should preferably be reduced. If the charging level at the charging position 320 is not reduced, the braking capability for the vehicle 10 may not be sufficient or the service brakes may be overheated, etc. In detail, the processing circuitry 702 may set S4 a reduced maximum charge level of the high-voltage energy storage system in response to the regenerative charge power exceeding the charge power ability at the portion of the downhill slope 402, 404. The processing circuitry 702 thereafter controls S5 the charging of the high-voltage energy storage system 20 at the current charging position 320 to an energy level to, or below, the reduced maximum charge level. The processing circuitry 702 may here be configured to interrupt charging of the high-voltage energy storage system. By controlling the high-voltage energy storage system 20 to be charged to a lower charge level before leaving the charging position 320, the charge level 202 will be lower when arriving at the portion of the downhill slope 402, 404, and as a consequence, the charge power ability 204 will be higher. Preferably, the processing circuitry determines a charge level of the high-voltage energy storage system 20 at the portion of the downhill slope 402, 404 resulting in an updated charge power ability exceeding the regenerative charge power, and sets the reduced maximum charge level at the charging position in response to the charge level of the high-voltage energy storage system 20.

When charging of the high-voltage energy storage system 20 at the charging position 320 is completed, the vehicle 10 may initiate its journey. It should be readily understood that the processing circuitry 702 at this stage has not been provided with data relating to the desired destination for the vehicle 10. The vehicle 10 may thus be driven straight south along the road indicated with reference numeral 350, or straight north along the road indicated with reference numeral 360. As can be seen in Fig. 3, the portion of the downhill slope 402, 404 that was used for setting the reduced maximum charge level at the charging position is located either west from the charging position 320 or north-east from the charging position 320. The above, as well as the below disclosure that will follow, thus sets a reduced maximum charge level at the charging position 320 in response to a potential route that might be driven after the vehicle leaves the charging position.

Based on the above, if the distance to the portion of the downhill slope 402, 404 is too far away from the charging position 320, the processing circuitry 702 may be configured to allow the high-voltage energy storage system 20 to be charged to a maximum possible charge level of the high-voltage energy storage system 20. Accordingly, the processing circuitry 702 may be configured to control charging of the high-voltage energy storage system 20 at the current charging position 320 to the energy level to, or below, the reduced maximum state of charge level only when the distance to the portion of the downhill slope is below a predetermined distance value.

When there is more than one geographic zone with a downhill slope within the predetermined radius 301 as exemplified in Figs. 3 and 4, the processing circuitry may advantageously set the reduced maximum charge level in response to the downhill slope 402, 404 predicted to generate the largest regenerative charge power by the electric traction motor 20. In detail, the processing circuitry 702 is in such example configured to obtain a first 302 and second 304 geographic zone positioned within the predetermined radius 301 from the current charging position 320. The first geographic zone 302 comprising a first road with a first downhill slope 402 and the second geographic zone 304 comprising a second road with a second downhill slope 404. The processing circuitry 702 may then compare a first regenerative charge power of the electric traction motor 20 for obtaining a first desired vehicle speed during operation at the first downhill slope 402 with a second regenerative charge power of the electric traction motor 20 for obtaining a second desired vehicle speed during operation at the second downhill slope 404. The first and second desired vehicle speeds may thus not be the same, but can be e.g. two different maximum allowable vehicle speeds, one for each road. Before charging the high-voltage energy storage system 20 at the charging position 320, the processing circuitry 702 can set the reduced maximum charge level of the high-voltage energy storage system 20 in response to the largest one of the first and second regenerative charge powers. In a similar vein as the above description, the processing circuitry 702 sets a reduced maximum charge level only if the largest one of the first and second regenerative charge powers exceeds the charge power ability at the first 402 or second 404 downhill slopes. Accordingly, the processing circuitry advantageously determines a first charge power ability of the high-voltage energy storage system 20 when/if the vehicle arrives to the first downhill slope 402, as well as a second charge power ability of the high-voltage energy storage system 20 when/if the vehicle arrives to the second downhill slope 402. As an example, if the processing circuitry 702 determines that the first regenerative charge power for the first downhill slope 402 is higher than the second regenerative charge power for the second downhill slope 404, but where the difference between the second regenerative charge power and the second charge power ability is higher than the difference between the first regenerative charge power and the first charge power ability, the processing circuitry 702 may set the reduced maximum charge level in response to the second regenerative charge power.

Further, the below described memory 704 may comprise data from previous operations of other vehicles or the ego-vehicle. Thus, at a specific charging position, the processing circuitry may set the reduced maximum charge level in response to a charge level for a vehicle that has been previously charged at the charging position. Preferably, the weight of such vehicle should be substantially the same and the energy storage system of similar charge capability.

Fig. 6 is a schematic diagram of a computer system 700 for implementing examples disclosed herein. The computer system 700 is adapted to execute instructions from a computer-readable medium to perform these and/or any of the functions or processing described herein. The computer system 700 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include processing circuitry 702 (e.g., processing circuitry including one or more processor devices or control units), a memory 704, and a system bus 706. The computer system 700 may include at least one computing device having the processing circuitry 702. The system bus 706 provides an interface for system components including, but not limited to, the memory 704 and the processing circuitry 702. The processing circuitry 702 may include any number of hardware components for conducting data or signal processing or for executing computer code stored in memory 704. The processing circuitry 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 702 may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processing circuitry 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., randomaccess memory (RAM)), or any other medium which can be used to carry or store desired program code in the form of machine-executable instructions or data structures and which can be accessed by a computer or other machine with processing circuitry 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program 720 stored on a transitory or non-transitory computer-usable or computer-readable storage medium (e.g., single medium or multiple media), such as the storage device 714, which includes complex programming instructions (e.g., complex computer-readable program code) to cause the processing circuitry 702 to carry out actions described herein. Thus, the computer-readable program code of the computer program 720 can comprise software instructions for implementing the functionality of the examples described herein when executed by the processing circuitry 702. In some examples, the storage device 714 may be a computer program product (e.g., readable storage medium) storing the computer program 720 thereon, where at least a portion of a computer program 720 may be loadable (e.g., into a processor) for implementing the functionality of the examples described herein when executed by the processing circuitry 702. The processing circuitry 702 may serve as a controller or control system for the computer system 700 that is to implement the functionality described herein.

The computer system 700 may include an input device interface 722 configured to receive input and selections to be communicated to the computer system 700 when executing instructions, such as from a keyboard, mouse, touch-sensitive surface, etc. Such input devices may be connected to the processing circuitry 702 through the input device interface 722 coupled to the system bus 706 but can be connected through other interfaces, such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may include a communications interface 726 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. A computer system comprising processing circuitry configured to control charging of a high-voltage energy storage system of a vehicle, the processing circuitry being configured to obtain data of at least one geographic zone positioned within a predetermined radius from a current charging position of the vehicle, the at least one geographic zone comprising a road with a downhill slope, determine a regenerative charge power of an electric traction motor of the vehicle during operation of at least a portion of the downhill slope, determine a charge power ability of the high-voltage energy storage system when the vehicle arrives to the portion of the downhill slope, in response to the regenerative charge power exceeding the charge power ability at the portion of the downhill slope, set a reduced maximum charge level of the high-voltage energy storage system, and control charging of the high-voltage energy storage system at the current charging position to an energy level to, or below, the reduced maximum charge level.

Example 2. The computer system of example 1, wherein the charge power ability is based on a predicted electric energy level of the high-voltage energy storage system when the vehicle arrives at the at least one portion of the downhill slope.

Example 3. The computer system of any one of examples 1 or 2, the processing circuitry being further configured to: determine a charge level of the high-voltage energy storage system at the portion of the downhill slope resulting in an updated charge power ability exceeding the regenerative charge power, and set the reduced maximum charge level at the charging position in response to the charge level.

Example 4. The computer system of example 3, wherein the processing circuitry is further configured to determine a level of electric energy consumable by the high-voltage energy storage system from the current charging position to the portion of the downhill slope, set the reduced maximum charge level at the charging position in response to the charge level and the level of consumable electric energy.

Example 5. The computer system of any one of the preceding examples, wherein the processing circuitry is further configured to: determine a total brake power required to obtain a desired vehicle speed during operation of the portion of the downhill slope, determine a brake power capability of at least one service brake of the vehicle, and determine a regenerative charge power of the electric traction motor as a difference between the total brake power and the brake power capability of the at least one service brake.

Example 6. The computer system of any one of the preceding examples, wherein the processing circuitry is further configured to: obtain a first and second geographic zone positioned within the predetermined radius from the current charging position, the first geographic zone comprising a first road with a first downhill slope and the second geographic zone comprising a second road with a second downhill slope, compare a first regenerative charge power of the electric traction motor for obtaining a first desired vehicle speed during operation at the first downhill slope with a second regenerative charge power of the electric traction motor for obtaining a second desired vehicle speed during operation at the second downhill slope, and set the reduced maximum charge level of the high-voltage energy storage system in response to the largest one of the first and second regenerative charge powers.

Example 7. The computer system of any one of the preceding examples, wherein the at least one portion of the downhill slope is the portion of the downhill slope requiring the largest regenerative charge power to obtain the desired vehicle speed.

Example 8. The computer system of any one of the preceding examples, wherein the desired vehicle speed is a predefined vehicle speed at the downhill slope.

Example 9. The computer system of example 8, wherein the predefined vehicle speed is a legislative speed limit of the downhill slope.

Example 10. The computer system of any one of the preceding examples, wherein the data of the geographic zone is received from a memory of the computer system, memory comprising data of a plurality of geographic zones, each geographic zone being associated with a map coordinate position.

Example 11. The computer system of example 10, wherein the processing circuitry is further configured to: receive map data coordinates of the current charging position, and obtain the data of the at least one geographic zone from the memory in response to the map data coordinates of the current charging position.

Example 12. The computer system of any one of the preceding examples, wherein the regenerative charge power is determined in response to a slope angle of the downhill slope.

Example 13. The computer system of example 12, wherein the regenerative charge power is further determined in response to a length of the downhill slope.

Example 14. The computer system of any one of the preceding examples, wherein the processing circuitry is further configured to: determine a distance from the charging position to the portion of the downhill slope, and control charging of the high-voltage energy storage system at the current charging position to the energy level to, or below, the reduced maximum state of charge level only when the distance to the portion of the downhill slope is below a predetermined distance value.

Example 15. A vehicle comprising the computer system of any of the preceding examples.

Example 16. The vehicle of example 15, further comprising an electric traction motor electrically connected to the high-voltage energy storage system, wherein the high-voltage energy storage system is configured to feed electric energy to the electric traction motor during propulsion of the vehicle, and to receive electric energy from the electric traction motor during braking.

Example 17. A computer-implemented method of controlling charging of a high-voltage energy storage system of a vehicle, the method comprising: obtaining, by a processing circuitry of a computer system, data of at least one geographic zone positioned within a predetermined radius from a current charging position of the vehicle, the at least one geographic zone comprising a road with a downhill slope, determining, by the processing circuitry, a regenerative charge power of an electric traction motor of the vehicle during operation of at least a portion of the downhill slope, determining, by the processing circuitry, a charge power ability of the high-voltage energy storage system when the vehicle arrives to the portion of the downhill slope, in response to the regenerative charge power exceeding the charge power ability at the portion of the downhill slope, setting, by the processing circuitry, a reduced maximum charge level of the high-voltage energy storage system, and controlling, by the processing circuitry, charging of the high-voltage energy storage system at the current charging position to an energy level to, or below, the reduced maximum charge level.

Example 18. A computer program product comprising program code for performing, when executed by the processing circuitry, the method of example 17.

Example 19. A non-transitory computer-readable storage medium comprising instructions, which when executed by the processing circuitry, cause the processing circuitry to perform the method of example 17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to control charging of a high-voltage energy storage system of a vehicle, the processing circuitry being configured to:
- obtain data of at least one geographic zone positioned within a predetermined radius from a current charging position of the vehicle, the at least one geographic zone comprising a road with a downhill slope,
- determine a regenerative charge power of an electric traction motor of the vehicle during operation of at least a portion of the downhill slope,
- determine a charge power ability of the high-voltage energy storage system when the vehicle arrives to the portion of the downhill slope,
- in response to the regenerative charge power exceeding the charge power ability at the portion of the downhill slope, set a reduced maximum charge level of the high-voltage energy storage system, and
- control charging of the high-voltage energy storage system at the current charging position to an energy level to, or below, the reduced maximum charge level.

2. The computer system of claim 1, wherein the charge power ability is based on a predicted electric energy level of the high-voltage energy storage system when the vehicle arrives at the at least one portion of the downhill slope.

3. The computer system of any one of claims 1 or 2, the processing circuitry being further configured to:
- determine a charge level of the high-voltage energy storage system at the portion of the downhill slope resulting in an updated charge power ability exceeding the regenerative charge power, and
- set the reduced maximum charge level at the charging position in response to the charge level.

4. The computer system of claim 3, wherein the processing circuitry is further configured to:
- determine a level of electric energy consumable by the high-voltage energy storage system from the current charging position to the portion of the downhill slope,
- set the reduced maximum charge level at the charging position in response to the charge level and the level of consumable electric energy.

5. The computer system of any one of the preceding claims, wherein the processing circuitry is further configured to:
- determine a total brake power required to obtain a desired vehicle speed during operation of the portion of the downhill slope,
- determine a brake power capability of at least one service brake of the vehicle, and
- determine a regenerative charge power of the electric traction motor as a difference between the total brake power and the brake power capability of the at least one service brake.

6. The computer system of any one of the preceding claims, wherein the processing circuitry is further configured to:
- obtain a first and second geographic zone positioned within the predetermined radius from the current charging position, the first geographic zone comprising a first road with a first downhill slope and the second geographic zone comprising a second road with a second downhill slope,
- compare a first regenerative charge power of the electric traction motor for obtaining a first desired vehicle speed during operation at the first downhill slope with a second regenerative charge power of the electric traction motor for obtaining a second desired vehicle speed during operation at the second downhill slope, and
- set the reduced maximum charge level of the high-voltage energy storage system in response to the largest one of the first and second regenerative charge powers.

7. The computer system of any one of the preceding claims, wherein the at least one portion of the downhill slope is the portion of the downhill slope requiring the largest regenerative charge power to obtain the desired vehicle speed.

8. The computer system of any one of the preceding claims, wherein the data of the geographic zone is received from a memory of the computer system, the memory comprising data of a plurality of geographic zones, each geographic zone being associated with a map coordinate position.

9. The computer system of claim 8, wherein the processing circuitry is further configured to:
- receive map data coordinates of the current charging position, and
- obtain the data of the at least one geographic zone from the memory in response to the map data coordinates of the current charging position.

10. The computer system of any one of the preceding claims, wherein the regenerative charge power is determined in response to a slope angle of the downhill slope and a length of the downhill slope.

11. The computer system of any one of the preceding claims, wherein the processing circuitry is further configured to:
- determine a distance from the charging position to the portion of the downhill slope, and
- control charging of the high-voltage energy storage system at the current charging position to the energy level to, or below, the reduced maximum state of charge level only when the distance to the portion of the downhill slope is below a predetermined distance value.

12. A vehicle comprising the computer system of any of the preceding claims.

13. A computer-implemented method of controlling charging of a high-voltage energy storage system of a vehicle, the method comprising:
- obtaining (S 1), by a processing circuitry of a computer system, data of at least one geographic zone positioned within a predetermined radius from a current charging position of the vehicle, the at least one geographic zone comprising a road with a downhill slope,
- determining (S2), by the processing circuitry, a regenerative charge power of an electric traction motor of the vehicle during operation of at least a portion of the downhill slope,
- determining (S3), by the processing circuitry, a charge power ability of the high-voltage energy storage system when the vehicle arrives to the portion of the downhill slope,
- in response to the regenerative charge power exceeding the charge power ability at the portion of the downhill slope, setting (S4), by the processing circuitry, a reduced maximum charge level of the high-voltage energy storage system, and
- controlling (S5), by the processing circuitry, charging of the high-voltage energy storage system at the current charging position to an energy level to, or below, the reduced maximum charge level.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
